# EUROPEAN PATENT APPLICATION

(11) **EP 4 585 919 A1**
(43) Date of publication of application: **16.07.2025**
(21) Application number: 23863053.7
(22) Date of filing: 30.08.2023
(51) Int. Cl.: G01N 30/02, B01D 11/00, B01D 15/40, B01J 3/02

(54) **GAS-LIQUID SEPARATOR AND SAMPLE COLLECTION METHOD USING SAME**

(30) Priority: 06.09.2022 JP 2022141669
(71) Applicant: JASCO Corporation, Hachioji-shi Tokyo 192-8537 (JP)
(72) Inventor: TERADA Akitaka, Hachioji-shi, Tokyo 192-8537 (JP); ISOGAI Atsushi, Hachioji-shi, Tokyo 192-8537 (JP)
(74) Representative: Lippert Stachow Patentanwälte Rechtsanwälte
(86) International application number: PCT/JP2023/031538
(87) International publication number: WO 2024/053515

(57) **Abstract**

A gas-liquid separator (10) has a double cylinder structure consisting of an outer cylinder (12) and an inner cylinder (14). An injection port that injects the fluid from the outside to the inside is provided on the inner wall at the upper end of the outer cylinder (12). An ejection port (12A) that ejects the liquid separated from the fluid is provided at the lower end of the outer cylinder (12). A lower end of the inner cylinder (14) is open in the inside of the outer cylinder (12). The upper end of the inner cylinder (14) penetrates through the closed upper end of the outer cylinder (12), and has an exhaust port (14B) that exhausts the gas separated from the fluid. A discharge port for discharging a solvent from the outside to the inside is provided, in addition to the injection port of the fluid, on the inner wall at the upper end of the outer cylinder (12). The injection port and the discharge port are arranged in such a manner that the gas part of the injected fluid descends while swirling in the inner space between the outer cylinder and the inner cylinder and the liquid part of the injected fluid and the discharged solvent descend mainly along the inner wall of the outer cylinder (12).

## Description

### Related Application

This application claims the priority of Japanese Patent Application No. 2022-141669 filed on September 6, 2022, the disclosure of which is incorporated herein by reference in its entirety.

### Technical Field

The present invention relates to a gas-liquid separator used for separating a fluid into gas and liquid in a supercritical fluid chromatograph or a supercritical fluid extraction apparatus, and to improvements in a method of recovering a sample using the same.

### Background Art

Carbon dioxide which is a mixed state of supercritical state and liquid state of 10 MPa or greater and is used as a mobile phase in a supercritical fluid chromatograph (SFC) or a supercritical fluid extraction apparatus (SFE), namely supercritical CO₂ passes through a back pressure regulator, and then is reduced to atmospheric pressure at the outlet of a pipe and vaporized. Since the volume of CO₂ expands approximately 500 times due to vaporization, a modifier (mainly organic solvents such as MeOH) contained in the mobile phase is scattered in the form of a spray with very strong force.

Therefore, to effectively recover a target component such as a sample or an extract dissolved in the mobile phase, a liquid-gas separator that depressurizes the fluid (the mobile phase that has passed through the back pressure regulator) to atmospheric pressure in a predetermined inner space in order to prevent the modifier from scattering, separates the fluid into gas (CO₂) and liquid (modifier) to take them out from separate ejection ports is necessary. Patent literature 1 discloses a nozzle for collecting extracted material, which is one example of conventional liquid-gas separators.

In the nozzle for collecting extracted material of Figure 3 of Patent literature 1, a filter portion (glass wool) is provided inside the nozzle body, and a tip of a fluid supplying pipe is almost in contact with the filter portion. The fluid (the mobile phase that has passed through the back pressure regulator) is sprayed from the tip of the pipe to the filter portion, and is separated into liquid and gas. Liquid drips from the lower ejection port via the filter portion and enters the recovery container. Gas is released to the outside of the nozzle body from an upper exhaust port.

Moreover, in Figure 4 (a) of Patent literature 1, a configuration of a fraction collector using the above-described nozzle for collecting extracted material is disclosed. To change the recovery container for each target component, i.e. each peak of the fraction, the fraction collector has a moving apparatus that moves the nozzle for collecting extracted material mounted to the tip of the pipe on an apparatus side.

Usually, a flow path between the back pressure regulator and the nozzle for collecting extracted material is provided with a switching valve that can switch the flow path of the fluid between a "recovery side" and a "disposal side". For example, when a detector provided to the apparatus detects the target component (first fraction peak) in the fluid, the switching valve is switched from the "disposal side" to the "recovery side" at a timing when the detected fluid reaches, and the detected fluid is sent to the nozzle for collecting extracted material. Accordingly, the liquid containing the target component enters the recovery container. Moreover, the switching valve is switched from the "recovery side" to the "disposal side" at a timing when the fluid that showed the peak of the first fraction passed therethrough, and disposes the fluid that does not contain the target component. The nozzle for collecting extracted material is moved to the upper part of the next recovery container while the switching valve is on the "disposal side" and waits for detecting the peak of the second fraction. Accordingly, target components (corresponding to peaks of fraction) are recovered to separate recovery containers. In the fraction collector of Figure 4(a) of Patent literature 1, it has an advantage that only one nozzle for collecting extracted material is required.

### Citation List

### Patent Literature

Patent Literature 1: Japanese Unexamined Patent Publication No. 2006-136838 A

### Summary of Invention

### Technical Problem

To achieve a high recovery rate of the sample by using the nozzle for collecting extracted material of Patent literature 1, the liquid must be recovered in a state in which substantially all target components in the fluid are dissolved in the liquid. Therefore, the flow rate of the liquid separated in the nozzle for collecting extracted material is preferably larger. The liquid separated from the fluid is the modifier (organic solvent or the like) mixed in the supercritical fluid.

However, in so-called Gradient analysis in which the ratio of the modifier in the mobile phase is changed, the flow rate of the modifier may be low (at low organic solvent ratio condition). Moreover, the flow rate of the mobile phase itself may be low (at low flow condition). In these conditions, the flow rate of the modifier, i.e., the liquid portion, is small, so that the sample may not dissolve sufficiently in the separated liquid upon gas-liquid separation, and some of the sample may remain inside the nozzle collecting extracted material or may be exhausted together with the separated gas. As a result, it becomes difficult to recover the sample at a high recovery rate.

The object of the present invention is to provide a gas-liquid separator that can recover a sample (including an extract) from a fluid, which is a mobile phase that has passed through a back pressure regulator, at a high recovery rate, regardless of the condition of the mobile phase, and a method of recovering the sample.

### Solution to Problem

To achieve the above identified object, a gas-liquid separator of the present invention is a gas-liquid separator for separating a fluid into gas and liquid, the gas-liquid separator:
has a double-cylinder structure consisting of an outer cylinder and an inner cylinder;
comprises an injection port, provided on an inner wall at an upper end of the outer cylinder, for injecting the fluid from outside into inside of the outer cylinder, and
an ejection port, provided at a lower end of the outer cylinder, for ejecting the liquid separated from the fluid,
wherein a lower end of the inner cylinder is open in the inside of the outer cylinder,
an upper end of the inner cylinder penetrates the closed upper end of the outer cylinder, and has an exhaust port for exhausting the gas separated from the fluid,
an inner wall at the upper end of the outer cylinder is provided with a discharge port for discharging a solvent from the outside to the inside, in addition to the injection port, and
at least the injection port of the fluid is arranged in such a manner that the injected fluid swirls along the inner wall of the outer cylinder between the outer cylinder and the inner cylinder.

Here, the fluid sent to the gas-liquid separator is injected from the injection port to the space between the outer cylinder and the inner cylinder, and is separated into gas and liquid by descending while swirling. The separated gas enters the inside of the inner cylinder from an opening at the lower end of the inner cylinder, and is exhausted from the exhaust port at the upper end of the inner cylinder. The separated liquid mainly descends along the inner wall of the outer cylinder, and is ejected from the ejection port at the lower end. As such, the liquid can be gently separated from the fluid, and the sample dissolved in the separated liquid is recovered.

According to the configuration of the present invention, the gas-liquid separator is provided with a flow path for supplying a solvent, which is described later, to the inside of the gas-liquid separator, in addition to a supply flow path of the fluid. The solvent discharged from the discharge port to the space between the outer cylinder and the inner cylinder mainly descends along the inner wall of the outer cylinder together with the liquid separated from the fluid.

### <Recovery assistance>

When the condition of the mobile phase is a "low organic solvent ratio condition (low modifier condition)" or a "low flow condition", for example, the ratio of the sample to the modifier becomes high under the "low organic solvent ratio condition", so that not all of the sample is dissolved in liquid (modifier). Since the supply amount of the fluid per time to the gas-liquid separator becomes low under the "low flow condition", a sample that cannot dissolve in the liquid (modifier) is easily generated.

The fluid and a solvent different from the fluid can be supplied to the gas-liquid separator simultaneously by using the gas-liquid separator of the present invention, so that even when there is a sample that is not dissolved in the liquid separated from the fluid as in the above-described condition of the mobile phase, the solvent supplied separately from the fluid captures (dissolves) such sample to be ejected together. Accordingly, the solvent different from the fluid assists recovery of the sample, and the sample can be recovered at a high recovery rate regardless of the condition of the mobile phase.

### <Washing>

Moreover, in the above-described Gradient analysis, for example, the condition of the mobile phase gradually changes, and the flow rate of the liquid portion (organic solvent) in the fluid in the peak of each fraction also varies. On the other hand, the solvent different from the fluid can be continuously supplied to the gas-liquid separator before and after the supply of the fluid is stopped (or the solvent different from the fluid can be supplied to the gas-liquid separator after the supply of the fluid is stopped) by using the gas-liquid separator of the present invention, so that the inside can be washed with a sufficient amount of the solvent regardless of the condition of the mobile phase. Accordingly, the sample inside the gas-liquid separator is more likely to be recovered with the solvent used for washing, and contamination between the recovery containers can be suppressed while maintaining a high recovery rate.

The gas-liquid separator of the present invention preferably comprises a supply apparatus that supplies a solvent that is discharged from the discharge port.

Here, the supply apparatus of the solvent may supply water, an aqueous solution in which an acid or a salt is dissolved, or any organic solvent as a solvent regardless of the condition of the mobile phase. Moreover, the supply apparatus of the solvent may adjust the supply amount of the solvent in accordance with the flow rate of the fluid.

A method of supplying a sample of the present invention is a method of recovering the sample from a fluid in a supercritical fluid chromatography or a supercritical fluid extraction apparatus, the method characterized in that:
a detector for detecting a peak of a target component contained in the sample in the fluid is provided;
pressure of the fluid is adjusted by a back pressure regulator provided downstream of the detector;
when the detector detects the peak of the target component, a disposal/recovery switching valve provided downstream of the back pressure regulator is switched to a flow path on a recovery side at a timing when the target component reaches the disposal/recovery switching valve, the fluid containing the sample is separated into gas and liquid by a gas-liquid separator provided at the flow path on the recovery side, and the separated liquid is recovered;
the disposal/recovery switching valve provided downstream of the back pressure regulator is switched to a flow path on a disposal side at a timing when the passing of the target component is completed based on the peak of the target component to dispose the fluid; and
from before switching to after switching the disposal/recovery switching valve to the flow path on the disposal side, or after switching the disposal/recovery switching valve to the flow path on the disposal side, a solvent different from the fluid is supplied to the gas-liquid separator, and the supplied solvent is recovered together with a liquid inside the gas-liquid separator.

Like the effect of the above-described gas-liquid separator, by executing the method of recovering the sample of the present invention, the fluid and the solvent different from the fluid are supplied to the gas-liquid separator simultaneously in a recovery mode (when the disposal/recovery switching valve is the "flow path on the recovery side"), so that, even when there is a sample that is not dissolved in the liquid inside the gas-liquid separator, the solvent supplied separately from the fluid captures (dissolves) such sample and will be ejected together, and the sample can be recovered at a high recovery rate regardless of the condition of the mobile phase.

Moreover, by continuously supplying the solvent different from the fluid before and after the supply of the fluid is stopped (or supplying the solvent different from the fluid after the supply of the fluid is stopped) in a disposal mode (when the disposal/recovery switching valve is the "flow path on the disposal side"), the inside of the gas-liquid separator can be washed with a sufficient amount of a makeup solvent regardless of the condition of the mobile phase, contamination of a non-target component in each recovery container can be suppressed, and a high recovery rate can be achieved.

The method of supplying the sample of the present invention preferably comprises steps of:
preparing a plurality of recovery containers different for each target component of the sample;
after stopping the supply of the solvent to the gas-liquid separator, waiting for a predetermined time while the gas-liquid separator is set to the present recovery container; and
after waiting for the predetermined time, changing a relative positional relationship between the gas-liquid separator and the plurality of recovery containers to set the gas-liquid separator to the next recovery container.

To perform gas-liquid separation inside the gas-liquid separator, a liquid separated from the fluid is present in the inner space of the gas-liquid separator after the disposal/recovery switching valve is switched to the "flow path on the disposal side", and a supplied solvent is also present. A certain waiting time (drop waiting time) is required until the separated liquid or the supplied solvent is ejected from the gas-liquid separator. Therefore, in the method of recovering the sample of the present invention, the gas-liquid separator is made to wait while being set to the present recovery container for a predetermined time after the supply of the solvent to the gas-liquid separator is stopped as the "drop waiting time". During this waiting time, the sample (present target component) inside the gas-liquid separator is recovered to the present recovery container together with the separated liquid or the supplied solvent. This allows the target component to be recovered to the same recovery container as much as possible, further improving the recovery rate and increasing the effect of suppressing contamination.

### Advantageous Effects of Invention

According to the gas-liquid separator and the method of recovering the sample as described above, the sample (including an extract) can be recovered at a high recovery rate regardless of the condition of the mobile phase such as a wide range of flow rate conditions and various compositional conditions.

### Brief Description of Drawings

Figure 1 shows a schematic configuration and a principle of a gas-liquid separator of a first embodiment.
Figure 2A is a cross-sectional view showing a positional relationship of two flow paths of the gas-liquid separator in a certain pattern.
Figure 2B is a cross-sectional view showing a positional relationship of the two flow paths of the gas-liquid separator in a different pattern.
Figure 3A is a cross-sectional view showing inclination angles of the two flow paths of the gas-liquid separator in a certain pattern.
Figure 3B is a cross-sectional view showing inclination angles of the two flow paths of the gas-liquid separator in a different pattern.
Figure 4 shows a three-dimensional shape of a flow straightening chip of the gas-liquid separator.
Figure 5 shows a structure of preventing condensation of the gas-liquid separator.
Figure 6 is a schematic configuration showing a configuration after a back pressure regulator of a supercritical fluid chromatograph using the gas-liquid separator.
Figure 7 is an operational flow diagram of recovering a sample using the gas-liquid separator.
Figure 8 is an operational flow diagram (including a drop waiting time) of recovering a sample using the gas-liquid separator.
Figure 9 is an explanatory diagram of a peak group of a fraction and a sample recovery operation of Example 1.
Figure 10 is an explanatory diagram of a peak group of a fraction and a sample recovery operation of Example 2.

### Description of Embodiments

A gas-liquid separator according to a first embodiment of the present invention is connected a pipe provided downstream of a back pressure regulator of a supercritical fluid chromatograph or a supercritical fluid extraction apparatus, separates a mixed fluid (liquefied CO₂ and modifier) supplied from the pipe into gas (CO₂) and liquid (modifier), and is used for recovering the liquid.

The mixed fluid supplied to the gas-liquid separator is a mobile phase that has passed through the back pressure regulator, and CO₂ contained in the mobile phase is in a state of a supercritical fluid, a state of a liquefied CO₂, or a state of a gas-liquid mixed fluid in which a part of a liquefied CO₂ is vaporized, or in a mixed state thereof. To simplify explanation, it is regarded in the present embodiment that the mobile phase that has passed through the back pressure regulator contains the liquefied CO₂.

The structure of the gas-liquid separator of the present embodiment is described with reference to the drawings.

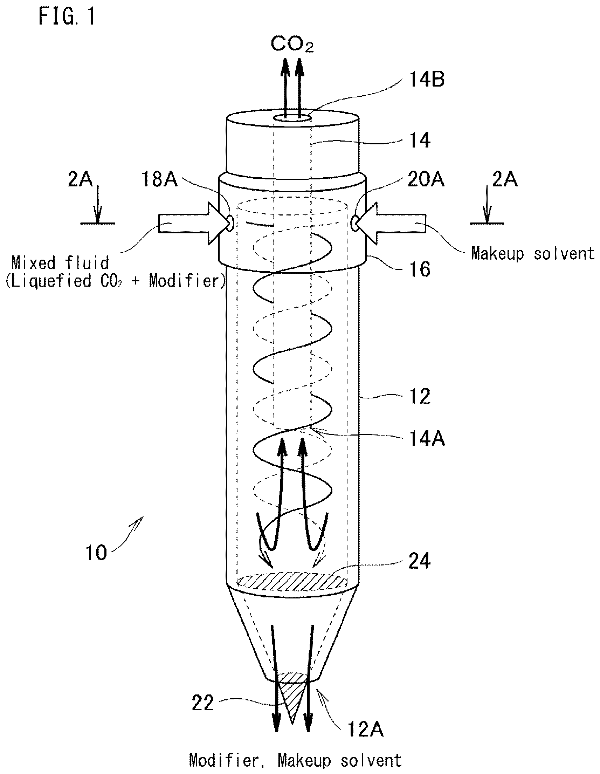

Figure 1 is a schematic configuration of a gas-liquid separator 10. The gas-liquid separator 10 has a double-cylinder structure consisting of an outer cylinder 12 and an inner cylinder 14. An upper end of the outer cylinder 12 is closed with a connection block 16, and a cylindrical inner space that is continuous with an inner space of the outer cylinder 12 is formed inside the connection block 16.

On an outer peripheral surface of the connection block 16, an inflow port 18A for connecting a supply pipe of a mixed fluid, and an inflow port 20A for connecting a supply pipe of a makeup solvent are formed.

The makeup solvent as used herein indicates a liquid solvent that is supplied separately from the mixed fluid between the outer cylinder 12 and the inner cylinder 14 of the gas-liquid separator 10, and is selected from water, an aqueous solution in which an acid or salt is dissolved, or any organic solvent, for example.

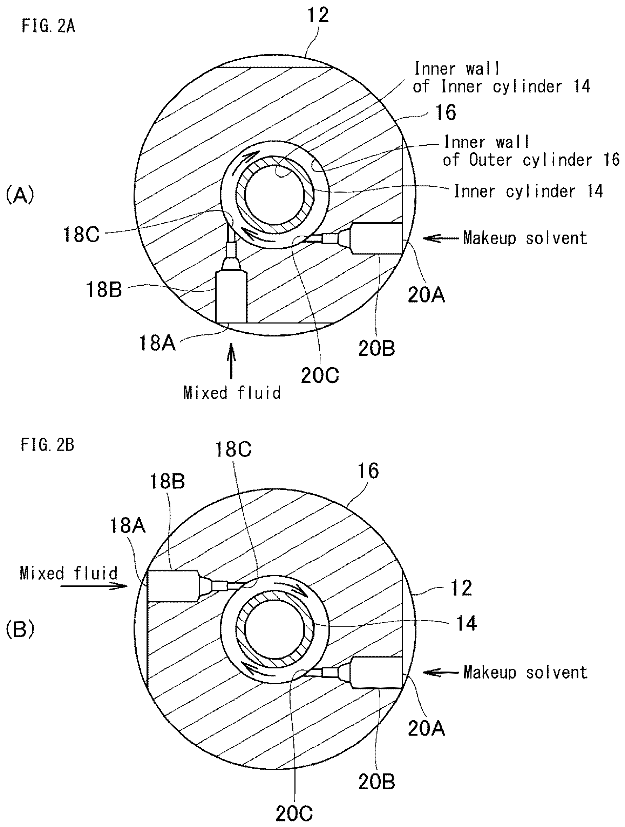

Moreover, as shown in Figure 2(A) (cross-sectional view of the arrow 2A-2A on Figure 1), an inflow path 18B in which the mixed fluid from the inflow port 18A flows and an inflow path 20B in which the makeup solvent from the other inflow port 20A flows are formed to the connection block 16.

Moreover, an injection port 18C for injecting the mixed fluid to the inside and a discharge port 20C for discharging the makeup solvent to the inside are formed to the inner wall of the connection block 16 (which is continuous with the inner wall of the outer cylinder 12).

The inner space at the lower end of the outer cylinder 12 becomes narrower towards the lower end in an inverted conical shape, and an ejection port 12A for ejecting the modifier separated from the mixed fluid is formed at the lower end of the outer cylinder 12. A flow straightening chip 22 is mounted to the ejection port 12A, and a straightening filter 24 is mounted to the upper inner space of the flow straightening chip 22. The straightening filter 24 weakens the force of the flow (straightens) of the separated modifier, and guides the modifier to the flow straightening chip 22. The flow straightening chip 22 transmits the modifier, which passed through the straightening filter 24 and the force thereof has become gentle, by a surface tension, straightens the flow, and drips it down from a central part that is projected downwards to the recovery container.

The lower end of the inner cylinder 14 is open in the inside of the outer cylinder 12. An opening 14A at the lower end of the inner cylinder is located above the straightening filter, and, in this embodiment, the opening 14A is located at a height position approximately at the middle of the inner space of the outer cylinder 12. The upper end of the inner cylinder 14 penetrates through the connection block 16 at the upper part of the outer cylinder 12, and has an exhaust port 14B for exhausting a gas separated from the fluid. Accordingly, pressure in the inner space between the outer cylinder 12 and the inner cylinder 14 is atmospheric pressure in an empty state.

As shown in the cross-sectional view of Figure 2(A), the wall thickness of the outer cylinder 12 and the connection block 16 is significantly thick compared to the inner cylinder 14. In the connection block 16, the inflow path 18B of the mixed fluid and the inflow path 20B of the makeup solvent are formed on this cross-section. The center lines of each of the inflow paths 18B, 20B coincides with a tangent to the annular inner space sandwiched between the outer cylinder 12 and the inner cylinder 14. Moreover, when the inflow path 20B of the makeup solvent is rotated 90 degrees clockwise around the center axis of the double cylinder structure, the inflow path 20B of the makeup solvent coincides with the inflow path 18B of the mixed fluid. That is, the injection port 18C of the mixed fluid is located in a discharge direction of the makeup solvent from the discharge port 20C.

Moreover, as shown in the cross-sectional view of Figure 2(B), two inflow paths 18B and 20B may be arranged in such a manner that the inflow path 20B of the makeup solvent coincides with the inflow path 18B of the mixed fluid when the inflow path 20B of the makeup solvent is rotated 180 degrees around the center axis of the double cylinder structure.

The positional relationships of the inflow paths 18B and 20B shown in Figures 2(A) and 2(B) are examples, and as long as the two do not overlap, they may be arranged in any positional relationship, not limited to the positional relationship of the rotation angle of 90° or 180° described above.

The above is the schematic configuration of the gas-liquid separator 10 of the present embodiment, and its action is described in the following.

When the mixed fluid flows through the pipe and reaches the injection port 18C, the liquefied CO₂ is depressurized to atmospheric pressure to be vaporized, and its volume expands. Accordingly, the mixed fluid is sprayed from the injection port 18C, forming a swirling flow in the annular inner space between the outer cylinder 12 and the inner cylinder 14 as indicated by the arrows in the figure. By such swirling, the mixed fluid collides with the inner wall of the outer cylinder 14 in the annular inner space, and the modifier component adheres to the inner wall, causing the mixed fluid to separate into CO₂ and the modifier. The separated CO₂ descends while swirling, and ascends inside the inner cylinder from the opening 14A at the lower end of the inner cylinder 14 to be exhausted from the exhaust port 14B at the upper end of the inner cylinder 14.

The separated modifier mainly descends along the inner wall of the outer cylinder 12.

In the case of the makeup solvent, although it does not have as much force as the mixed fluid, it similarly forms a flow that swirls in the annular inner space in accordance with the discharge pressure of a supply pump. Then, the makeup solvent collides with the inner wall of the outer cylinder 12 in the annular internal space, adheres to the inner wall, and then flows down mainly along the inner wall of the outer cylinder 12.

The modifier and the makeup solvent descend along the inner wall of the outer cylinder 12, so that scattering of these liquids can be suppressed, and a gentle separation of liquid can be achieved.

The modifier and the makeup solvent that are descended pass through the straightening filter 24 and the flow straightening chip 22 and drip down from the ejection port 12A to the recovery container, so that the sample dissolved in the modifier and the makeup solvent is recovered to the recovery container.

In Figure 1, for convenience of illustration, it appears that when the mixed fluid and the makeup solvent are to be supplied simultaneously, the swirling flow of the mixed fluid after injection and the swirling flow of the makeup solvent after discharge are independent flows. In fact, however, both the mixed fluid and the makeup solvent spread in a spray shape (cone shape) from the injection port 18C or the discharge port 20C and form a flow along the inner wall of the outer cylinder 12 while colliding with the inner wall, so that a swirling flow in which the two are mixed is formed. Then, the modifier separated from the mixed fluid adheres to the inner wall, and the makeup solvent also adheres to the inner wall, so that the modifier and the makeup solvent descend along the inner wall together. Meanwhile, the separated CO₂ continues to swirl and descends, and passes through the inner cylinder 14 to be exhausted.

By using the gas-liquid separator of the present embodiment in such way,
(1) the mixed fluid and the makeup solvent can be supplied to the gas-liquid separator 10 simultaneously, so that even when there is a sample that is not dissolved in the separated modifier when the condition of the mobile phase is "low modifier condition" or "low flow condition" for example, the makeup solvent captures (dissolves) such sample and they will be ejected together. Accordingly, the sample can be recovered at a high recovery rate regardless of the condition of the mobile phase.
(2) In a Gradient analysis, for example, the condition of the mobile phase changes gradually, and the flow rate of the modifier in the mixed fluid at the peak of each fraction varies; however, the makeup solvent can be continuously supplied before and after the supply of the mixed fluid to the gas-liquid separator 10 is stopped (or the makeup solvent can be supplied after the supply of the fluid is stopped), so that the inside of the gas-liquid separator 10 can be washed with a sufficient amount of the makeup solvent regardless of the condition of the mobile phase. The sample inside the gas-liquid separator 10 is more likely to be recovered together with the makeup solvent used for washing. Therefore, when recovering each target component into multiple recovery containers according to the number of target components, contamination of components other than the target components (target components planned to be recovered in other recovery containers) can be prevented, and a high recovery rate can be achieved.
   By adjusting the flow rate of the makeup solvent, washing with a fixed amount of the organic solvent can also be achieved.
(3) A solvent that easily freezes by adiabatic expansion of supercritical CO₂ such as water, an aqueous solution in which acid or salt is dissolved, or cyclohexane, for example, can be used as the makeup solvent, so that the range of selection of the makeup solvent is widened.

For example, (i) when "water" is flown into the flow path as the makeup solvent in the upper stream of the back pressure regulator, there is a risk that the water will freeze due to the cooling effect caused by adiabatic expansion of supercritical CO₂ at the outlet of the back pressure regulator, causing the flow path to become clogged. (ii) Similarly, when water is flown into the flow path between the back pressure regulator and the gas-liquid separator, there is a risk of the flow path to become clogged. On the other hand, if the makeup solvent is configured to be supplied to the gas-liquid separator 10 directly like the present embodiment, the risk of the flow path to become clogged by freezing of the solvent can be avoided even when a solvent having a melting point around 0 °C to 10°C is adopted as the makeup solvent.

In addition, if a solvent that does not freeze easily (e.g., ethanol, methanol, isopropanol, acetonitrile, etc.) is used, it is possible to supply this as a first makeup solvent, for example, from the upper stream of the back pressure regulator, and also to directly supply a solvent that does not freeze easily as a second makeup solvent in the gas-liquid separator of this embodiment, thereby making it possible to "use in combination". Of course, a solvent that freezes easily can be adopted as the second makeup solvent that is supplied directly to the gas-liquid separator.

(4) Recovery containers of various sizes and shapes can be used.

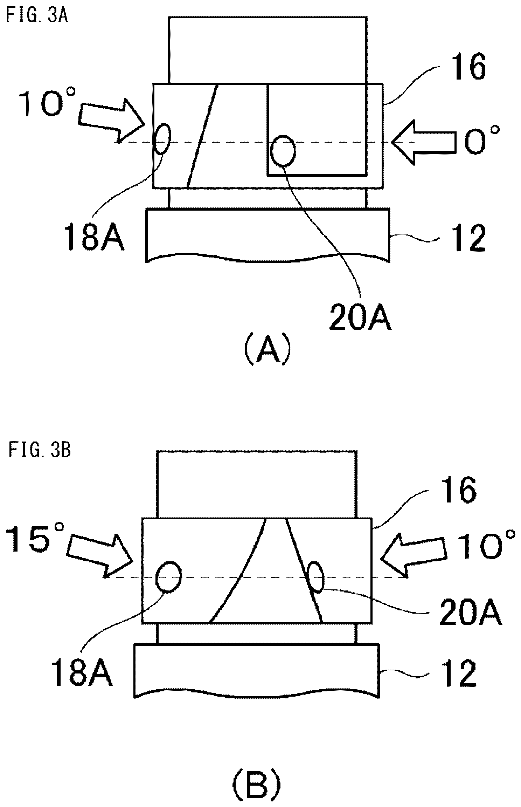

Figure 3 (A) and (B) are external views of the connection block 16 at the upper part of the outer cylinder 12 seen from different directions, and explain the inclination angles of the inflow ports 18A and 20A formed to the connection block 16. The dashed lines in the drawings indicate the horizontal plane.

Figure 3 (A) shows the inclination angels of the inflow ports 18A and 20A suitable for a high flow rate. The pipe of the makeup solvent is connected to the inflow port 20A parallel (0°) to the horizontal plane, and the pipe of the mixed fluid is connected to the inflow port 18A formed in a diagonally downward direction towards the inside at an inclination angle of 10° with respect to the horizontal plane.

Figure 3 (B) shows the inclination angels of the inflow ports 18A and 20A suitable for a low flow rate. The pipe of the makeup solvent is connected to the inflow port 20A formed in a diagonally downward direction towards the inside at an inclination angle of 10° with respect to the horizontal plane, and the pipe of the mixed fluid is connected to the inflow port 18A formed in a diagonally downward direction towards the inside at an inclination angle of 15° with respect to the horizontal plane.

In the case of the horizontal direction (0°), the force of injection or discharge is consumed by the swirling flow, so that the swirling time becomes longer and separation performance improves; however, since dropping is left to its own weight, the ejection time becomes longer. Therefore, at high flow rates as shown in Figure 3 (A), since the amount of mixed fluid that needs to be separated is large and the swirling time needs to be gained as much as possible, it is better to make the horizontal direction or the inclination angle small.

In contrast, if a diagonally downward inclination angle is provided, the force of injection or discharge can be dispersed into the swirling flow and dropping. Therefore, since there is no need to gain the swirling time when the flow rate is small, it is better to increase the diagonally downward inclination angle as shown in Figure 3(B) and use a part of injection or discharge force for dropping and shorten the ejection time of the separated liquid.

Three flow paths (0°, 10°, 15°) of different inclination angles or four or more flow paths (different inclination angles are set suitably) may be formed to one gas-liquid separator. For example, the connection method shown in Figure 3 (A) may be used at a high flow rate, and the connection method shown in Figure3 (B) may be used at a low flow rate. The unused inflow port is plugged and closed.

Figure 2 (A), Figure 2 (B), Figure 3 (A) and Figure 3 (B) show cases in which the levels in height direction of two inflow ports 18A and 20A are approximately the same; the washing performance of the makeup solvent can be enhanced by making the position of the inflow port 20A of the makeup solvent higher than the inflow port 18A of the mixed fluid.

In any case, the direction of the inflow port 18A of the mixed fluid may be determined such that at least the injected mixed fluid swirls between the outer cylinder 12 and the inner cylinder 14 along the inner wall of the outer cylinder 12, and them method of determining the direction of the inflow port 20A of the makeup solvent is not limited to one that is described herein.

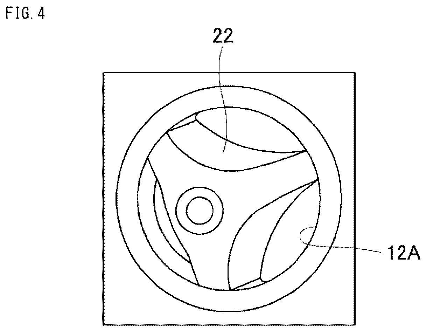

Figure 4 shows an example of a specific three-dimensional shape of the flow straightening chip 22.

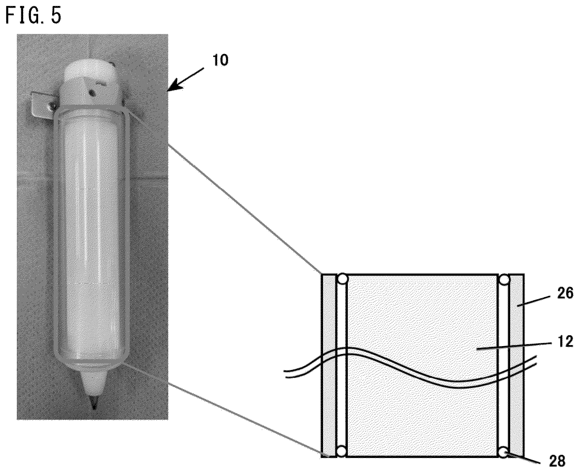

Figure 5 shows a condensation-preventing structure of the gas-liquid separator 10. The inside of the gas-liquid separator 10 is cooled by adiabatic expansion associated with vaporization of the liquefied CO₂. Condensation may occur on the outer peripheral surface of the outer cylinder 12, depending on the ratio of CO₂, humidity inside the room, or the recovery time. To prevent water generated by condensation descending along the outer cylinder and entering the recovery container, the condensation-preventing structure is preferably provided. The main body of the outer cylinder 12 is formed with polyether ether ketone (PEEK) resin, for example, and a cylindrical cover 26 (e.g., made of a transparent acrylic resin) having an outer diameter that is a size larger is mounted to the outer periphery of the outer cylinder via two packings 28 at the top and bottom, so that the outer cylinder itself has a double tube structure of preventing condensation.

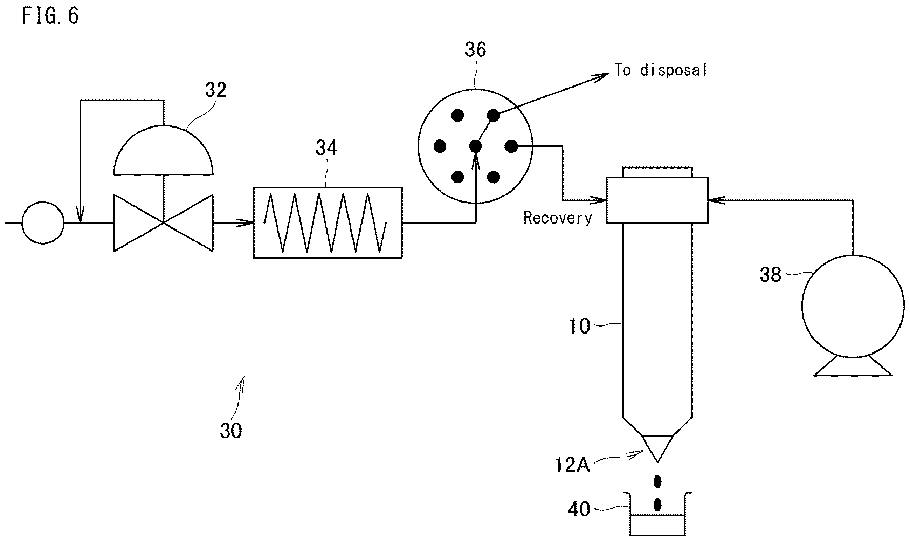

Next, the method of recovering the sample using the gas-liquid separator 10 of the present embodiment is specifically described by using Figure 6. Figure 6 shows the configuration of the subsequent equipment after the back pressure regulator 32 of the supercritical fluid chromatograph 30.

The supercritical fluid chromatograph 30 uses supercritical CO₂ as a mobile phase, and a modifier (mainly MeOH) is mixed to the mobile phase to enhance solubility of the sample. The mobile phase to which the sample is injected by an autosampler travels through a column provided in a column oven, and the sample separates into target components temporally. A UV detector, for example, provided downstream of the column detects a peak of a fraction in accordance with the target component separated temporally.

The pressure in the flow path of the mobile phase is kept constant at about 10 MPa or higher by the back pressure regulator 32. The mobile phase that has passed the back pressure regulator 32 is a mixed fluid of liquefied CO₂ and the modifier, and this mixed fluid travels through a heater 34 and is sent to a disposal/recovery switching valve 36. The disposal/recovery switching valve 36 switches the flow path of the mixed fluid between the "disposal side" and the "recovery side". When it is switched to the disposal side, the mixed fluid is disposed. When it is switched to the "recovery side", the mixed fluid is supplied to the gas-liquid separator 10, depressurized to atmospheric pressure in the inner space of the gas-liquid separator 10, and separated into CO₂ and the modifier. The makeup solvent is supplied to the gas-liquid separator 10 from a pump 38 of a supply apparatus. The modifier separated from the mixed fluid in the gas-liquid separator 10 and the makeup solvent supplied to the gas-liquid separator 10 drip down from the ejection port 12A and enter the recovery container 40.

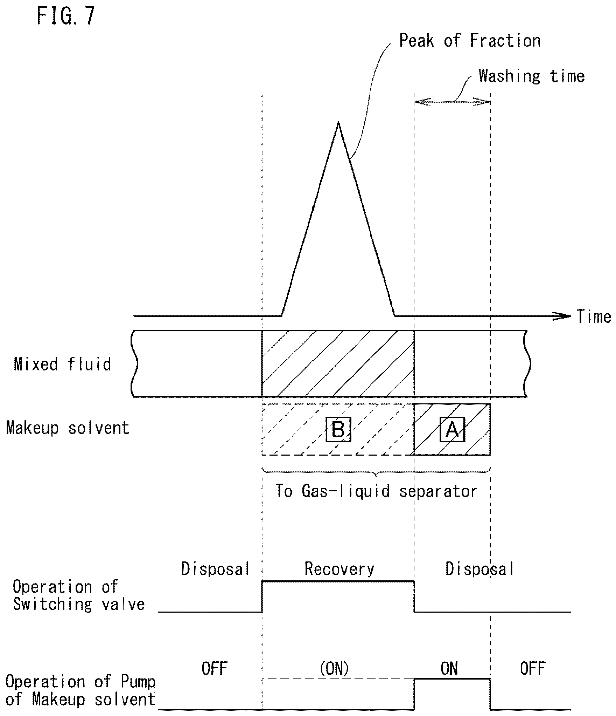

As shown in Figure 7, the disposal/recovery switching valve 36 switches the flow path to the "recovery side" having the timing of the peak of the fraction detected by the UV detector, for example, as a reference, so that the mixed fluid containing the target component is supplied to the gas-liquid separator 10, and the target component is recovered to the recovery container 40 together with the modifier and the makeup solvent.

Figure 7 shows an operational flow diagram of when the disposal/recovery switching valve 36 and the pump 38 of the makeup solvent operate in accordance with the peak of the fraction. The horizontal axis indicates time in Figure 7. The disposal/recovery switching valve 36 switches the flow path from the "disposal side" to the "recovery side" at a timing when the mixed fluid showing the peak of the fraction reaches the valve 36, and turns back the flow path from the "recovery side" to the "disposal side" at a timing when the passing of the mixed fluid showing the peak of the fraction is completed. Accordingly, the area hatched with diagonal lines of the mixed fluid in Figure 7 becomes the target of gas-liquid separation.

The pump 38 of the makeup solvent is turned "on" at a timing when the supply of the mixed fluid to the gas-liquid separator 10 is stopped, and starts the supply of the makeup solvent to the gas-liquid separator 10. Here, the predetermined time after the supply of the mixed fluid to the gas-liquid separator 10 is stopped is set as a "washing time", and when this washing time is elapsed, the pump 38 of the makeup solvent is turned "off" and stops the supply of the makeup solvent. Accordingly, the makeup solvent of Figure 7 (the area hatched with diagonal lines) is supplied to the gas-liquid separator 10.

The pump 38 of the makeup solvent may be turned "on" at a timing when the disposal/recovery switching valve 36 switches the flow path from the "disposal side" to the "recovery side" and start the supply of the makeup solvent to the gas-liquid separator 10, or it may be turned "on" at any timing while the flow path on the "recovery side" is selected and start the supply of the makeup solvent. Then, as described above, it may stop the supply of the makeup solvent when the "washing time" is elapsed.

The effect of supplying the makeup solvent of the area "A" to the gas-liquid separator by the operations of Figure 7 is as follows. When the disposal/recovery switching valve 36 is the flow path on the "disposal side", the makeup solvent is supplied to the gas-liquid separator 10 after the supply of the mixed fluid is stopped, so that the inside can be washed with a sufficient amount of makeup solvent regardless of the condition of the mobile phase, contamination of the target component in each recovery container can be suppressed, and a high recovery rate can be achieved.

Moreover, the effect of supplying the makeup solvent of the area "B" to the gas-liquid separator by the operations of Figure 7 is as follows. From the state where the disposal/recovery switching valve 36 is the flow path on the "recovery side", the mixed fluid and the make-up solvent are supplied to the gas-liquid separator 10 simultaneously, so that even when there is a sample that is not dissolved in the modifier inside the gas-liquid separator 10, the makeup solvent captures (dissolves) such sample to be ejected together, and the sample can be recovered at a high recovery rate regardless of the condition of the mobile phase.

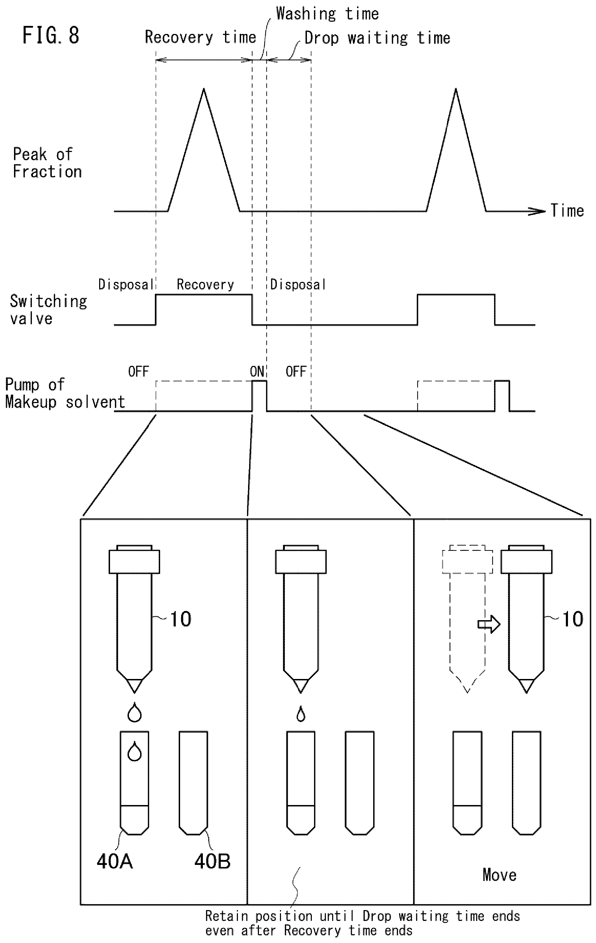

Next, Figure 8 shows an operation flow including the drop waiting time.

In Figure 8, after the disposal/recovery switching valve 36 turns back the flow path from the "recovery side" to the "disposal side" and the pump 38 of the makeup solvent stops the supply of the makeup solvent to the gas-liquid separator, the gas-liquid separator waits at a position of the present recovery container 40A for a predetermined drop waiting time.

When the drop waiting time is elapsed, a moving apparatus of the gas-liquid separator 10 is used to move the gas-liquid separator 10 to the position of the next recovery container 40B.

After the flow path is switched to the "disposal side", the modifier separated from the mixed fluid is present in the inner space of the gas-liquid separator 10, and the supplied makeup solvent is present therein too. Until the separated modifier and the makeup solvent are ejected from the gas-liquid separator 10, a certain waiting time (drop waiting time) is necessary. Therefore, as in the operation flow of Figure 8, the predetermined time after the supply of the makeup solvent to the gas-liquid separator 10 is stopped is set as the "drop waiting time", and the gas-liquid separator10 is set to the present recovery container 40A on standby. During this standby, the sample (the present target component) inside the gas-liquid separator 10 is recovered together with the separated modifier and the makeup solvent to the present recovery container 40A. This allows the sample to be collected as much as possible to the same recovery container 40A, further improving the recovery rate and increasing the effect of suppressing contamination of each recovery container with non-target components.

During washing, the modifier in the mobile phase is not supplied to the gas-liquid separator 10, so that the drop waiting time is shortened compared to a case when the modifier in the mobile phase is supplied to the gas-liquid separator 10 during washing.

### <Examples>

The gas-liquid separator of the present embodiment was connected to the supercritical fluid chromatograph to execute recovery of the sample, and the recovery rate of the sample was measured. Here, the supply of the makeup solvent was started after the recovery of each fraction peak, and the sample was recovered to different recovery containers for each fraction peak.

Condition of Example 1
   Column: Reversed phase column (C18)
   Mobile phase (CO₂/Methanol): 95/5
   Mobile phase flow rate: 120 mL/min
   Mobile phase pressure: 10 MPa
   Sample: Caffeine 1000 ppm
      Anthracene 500 ppm
      Fluorene 500 ppm
   Injection volume: 1000 µL
   Detection wavelength: 200-650 nm
   Makeup solvent: Methanol
   Makeup solvent flow rate: 10 mL/min
Condition of Example 2
   Column: Reversed phase column (C18)
   Mobile phase (CO₂/Methanol): 95/5
   Mobile phase flow rate: 20 mL/min
   Mobile phase pressure: 10 MPa
   Sample: Caffeine 1000 ppm
      Anthracene 500 ppm
      Fluorene 500 ppm
   Injection volume: 100 µL
   Detection wavelength: 200-400 nm, 215 nm
   Makeup solvent: Methanol
   Makeup solvent flow rate: 4 mL/min

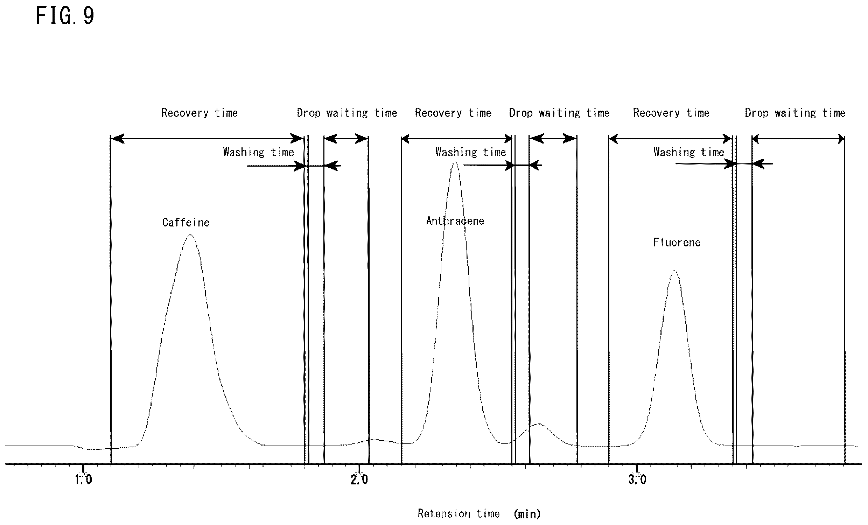

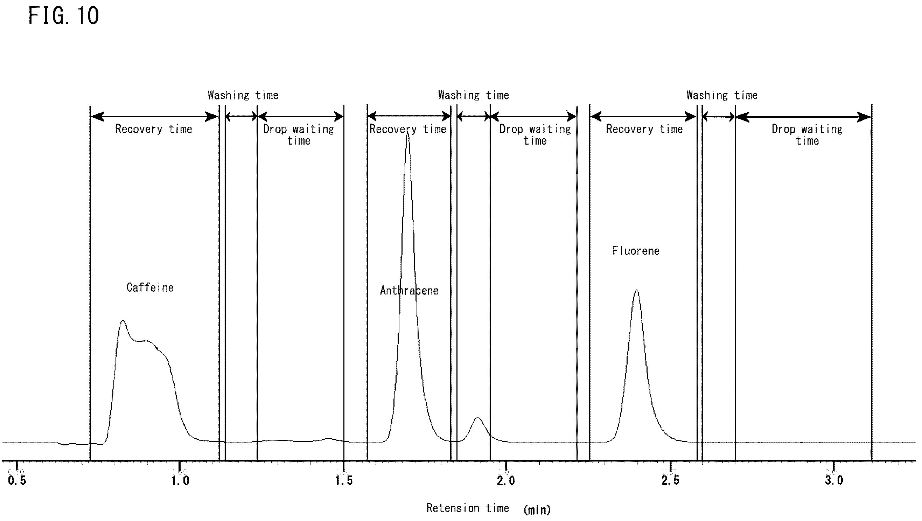

Figure 9 and Figure 10 show the peak groups of the fraction and the timing of the sample recovery operation of each example. The recovery rates (%) were as shown in Table 1 below.

**(Table 1)**

| Recovery rate (%) | Example 1 | Example 2 |
|---|---|---|
| Caffeine | 98.1 | 99.7 |
| Anthracene | 94.8 | 96.2 |
| Fluorene | 93.6 | (100) |

From the results of Examples 1 and 2, it was found that the target component could be recovered at a high recovery rate when the flow rate of the mobile phase was in the range of 20 to 120 mL/min and the sample injection volume was in the range of 100 to 1000 µL.

Although the embodiments of the present invention have been described above, the configurations, arrangements, and numerical values in the above embodiments are merely examples, and the present invention is not limited thereto.

### Reference Signs List

- 10: Gas-liquid separator
- 12: Outer cylinder
- 12A: Ejection port
- 14: Inner cylinder
- 14A: Opening
- 14B: Exhaust port
- 18C: Injection port
- 20C: Discharge port
- 30: Supercritical fluid chromatograph (configuration after Back pressure regulator)
- 32: Back pressure regulator
- 36: Disposal/recovery switching valve
- 38: Pump of Makeup solvent (supply apparatus of solvent)
- 40: Recovery container

## Claims

1. A gas-liquid separator for separating a fluid into gas and liquid, the gas-liquid separator:
having a double-cylinder structure consisting of an outer cylinder and an inner cylinder; and
comprising an injection port, provided on an inner wall at an upper end of the outer cylinder, for injecting the fluid from outside into inside of the outer cylinder, and
an ejection port, provided at a lower end of the outer cylinder, for ejecting the liquid separated from the fluid,
wherein a lower end of the inner cylinder is open in the inside of the outer cylinder,
an upper end of the inner cylinder penetrates the closed upper end of the outer cylinder, and has an exhaust port for exhausting the gas separated from the fluid,
an inner wall at the upper end of the outer cylinder is provided with a discharge port for discharging a solvent from the outside to the inside, in addition to the injection port, and
at least the injection port of the fluid is arranged in such a manner that the injected fluid swirls along the inner wall of the outer cylinder between the outer cylinder and the inner cylinder.

2. The gas-liquid separator of claim 1 further comprising a supply apparatus for supplying a solvent that is discharged from the discharge port.

3. A method of recovering a sample from a fluid in a supercritical fluid chromatograph or a supercritical fluid extraction apparatus, the method **characterized in that**:
a detector for detecting a peak of a target component contained in the sample in the fluid is provided;
pressure of the fluid is adjusted by a back pressure regulator provided downstream of the detector;
when the detector detects the peak of the target component, a disposal/recovery switching valve provided downstream of the back pressure regulator is switched to a flow path on a recovery side at a timing when the target component reaches the disposal/recovery switching valve, the fluid containing the sample is separated into gas and liquid by a gas-liquid separator provided at the flow path on the recovery side, and the separated liquid is recovered;
the disposal/recovery switching valve provided downstream of the back pressure regulator is switched to a flow path on a disposal side at a timing when the passing of the target component is completed based on the peak of the target component to dispose the fluid; and
from before switching to after switching the disposal/recovery switching valve to the flow path on the disposal side, or after switching the disposal/recovery switching valve to the flow path on the disposal side, a solvent different from the fluid is supplied to the gas-liquid separator, and the supplied solvent is recovered together with a liquid inside the gas-liquid separator.

4. The method of recovering the sample of claim 3, wherein
a plurality of recovery containers different for each target component of the sample is prepared;
after stopping the supply of the solvent to the gas-liquid separator, a predetermined time is waited while the gas-liquid separator is set to the present recovery container; and
after waiting for the predetermined time, a relative positional relationship between the gas-liquid separator and the plurality of recovery containers is changed to set the gas-liquid separator to the next recovery container.
